(19) Europäisches Patentamt
European Patent Office
Office européen des brevets

(11) **EP 4 289 565 A1**

(12) **EUROPEAN PATENT APPLICATION**

(43) Date of publication:
**13.12.2023 Bulletin 2023/50**

(21) Application number: **23166437.6**

(22) Date of filing: **04.04.2023**

(51) International Patent Classification (IPC):
**B25J 9/16** *(2006.01)*    **B25J 13/08** *(2006.01)*
**G05B 19/401** *(2006.01)*    **G05B 19/409** *(2006.01)*

(52) Cooperative Patent Classification (CPC):
**B25J 9/1692; B25J 9/1697; G05B 19/4015;
G05B 19/409;** G05B 2219/37068;
G05B 2219/39022

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022 JP 2022093872**

(71) Applicant: **DAIHEN Corporation
Yodogawa-ku
Osaka-shi
Osaka 532-8512 (JP)**

(72) Inventor: **IKEGUCHI, Makoto
Osaka-shi, Osaka (JP)**

(74) Representative: **Manitz Finsterwald
Patent- und Rechtsanwaltspartnerschaft mbB
Martin-Greif-Strasse 1
80336 München (DE)**

(54) **DEVICE, METHOD AND PROGRAM FOR MARKER POSITION REGISTRATION AND CORRESPONDING MARKER**

(57) Provided is a marker position registration device that can prevent an axial direction in a coordinate system from being erroneously registered when a position in a marker is to be registered. The marker position registration device includes a display control unit that causes an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker and a registration unit that registers the specific position in the robot coordinate system on the basis of a content input to the input form.

FIG. 4

| MARKER ID | CORNER NO | X-COORDINATE | Y-COORDINATE | Z-COORDINATE |
|---|---|---|---|---|
| 1 | 0 | 50 | 50 | 50 |
| 1 | 1 | 50 | 100 | 50 |
| 1 | 2 | 100 | 100 | 50 |

EP 4 289 565 A1

**Description**

**Background**

Field

The present invention relates to a marker position registration program, a marker position registration device, a marker position registration method, and a marker for use in the method.

Description of Related Art

When planning a motion of a robot on the basis of an image photographed by a camera, it is necessary to derive correlation between a coordinate system of the camera and a coordinate system of the robot and calibrate a positional relationship between the camera coordinate system and the robot coordinate system.

Patent Publication JP-A-2021-62463 discloses a method of setting a marker coordinate system on a robot-coordinate-system specification marker detected using an AR device, specifying a coordinate system of a robot on the basis of the set marker coordinate system, and calibrating a positional relationship between the robot displayed on the AR device and a real robot.

**Summary**

In the method in Patent Publication JP-A-2021-62463, when the marker coordinate system is to be set on the robot-coordinate-system specification marker, a work operation of moving the robot to touch up an origin of the robot-coordinate-system specification marker, an X-direction point thereof, a Y-direction point thereof (setting an origin coordinate system) by using a tool of the robot is necessary.

However, to perform the work operation, it is necessary to recognize which direction on the robot-coordinate-system specification marker displayed on the AR device corresponds to each axis of the robot coordinate system. As a result, in a case where, e.g., a worker's understanding thereof is ambiguous, when XY directions in the robot coordinate system are to be specified, it may be possible to specify a wrong direction and set the marker coordinate system. In this case, the robot cannot be correctly moved.

It is therefore an object of the present invention to provide a marker position registration program, a marker position registration device, a marker position registration method, and a marker for use in the method which can prevent an axial direction in a coordinate system from being erroneously registered when a position in the marker is to be registered.

A marker position registration program according to an aspect of the present invention causes a computer to function as: a display control unit that causes an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and a registration unit that registers the specific position in the robot coordinate system on the basis of a content input to the input form.

According to the aspect, it is possible to allow the coordinates in the robot coordinate system corresponding to the specific portion of the industrial robot indicating the specific position in the marker to be input in association with the position identifier assigned to the indicated specific position and register the input position identifier of the marker and the coordinates in the robot coordinate system of the specific position corresponding to a corner identifier thereof in association with each other. As a result, a worker inputs the specific position in the marker according to the position identifier assigned to the marker without being conscious of an axial direction in the robot coordinate system and inputs the coordinates in the robot coordinate system of the specific position to be able to register the position in the marker in the robot coordinate system. In other words, when the position in the marker is to be registered, it is possible to prevent the axial direction in the coordinate system from being erroneously registered.

In the above aspect, it may also be possible that a marker identifier for specifying the mark is further assigned to the marker, and the input form is further provided with an item to which the marker identifier is to be input in association with the position identifier.

According to the aspect, it is possible to allow the marker identifier assigned to the marker to be input and registered in association with the position identifier assigned to the marker. As a result, it is possible to inhibit the marker identifier from being erroneously input and registered.

In the above aspect, it may also be possible to further cause the computer to function as: a photographing unit that photographs an image including a work area of the industrial robot and the marker; a detection unit that detects the marker for which the specific position is registered by the registration unit on the basis of the image photographed by the photographing unit; and an arithmetic determination unit that arithmetically determines, on the basis of the specific position in the detected marker in each of a camera coordinate system based on the photographing unit and a marker coordinate system based on the detected marker, a conversion formula for performing coordinate conversion between the camera coordinate system and the marker coordinate system.

According to the aspect, when the marker for which the coordinates in the robot coordinate system corresponding to the specific position are registered is detected in the photographed image, it is possible to use the respective coordinates of the specific position in the detected marker in the camera coordinate system and the marker coordinate system to arithmetically determine the conversion formula for performing coordinate conversion between the camera coordinate system and the marker coordinate system. By using this conversion formula, it is possible to easily perform calibration to adjust a positional relationship between the marker and the robot.

In the above aspect, it may also be possible that the specific position includes positions individually corresponding to three or more portions included in the one marker.

According to this aspect, it is possible to reduce markers to be used for a work operation to one marker and therefore reduce marker management burden.

In the above aspect, it may also be possible that the specific position includes positions individually corresponding to a plurality of portions in a plurality of the markers.

According to the aspect, it is possible to set the specific position by distributing the specific position to the plurality of markers and thus easily change distances between the specific positions through adjustment of positions at which the markers are to be placed or the like. An error during coordinate conversion tends to decrease when intervals between reference points at the time of the conversion are increased. Accordingly, by, e.g., increasing the intervals at which the markers are disposed and increasing the distances between the specific positions, it is possible to reduce the error in the coordinate conversion based on the specific positions.

A marker position registration device according to another aspect of the present invention includes: a display control unit that causes an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and a registration unit that registers the specific position in the robot coordinate system on the basis of a content input to the input form.

According to this aspect, it is possible to allow the coordinates in the robot coordinate system corresponding to the specific portion of the industrial robot indicating the specific position in the marker to be input in association with the position identifier assigned to the indicated specific position and register the input position identifier of the marker and the coordinates in the robot coordinate system of the specific position corresponding to the position identifier in association with each other. As a result, a worker inputs the specific position in the marker according to the position identifier assigned to the marker without being conscious of an axial direction in the robot coordinate system and inputs the coordinates in the robot coordinate system of the specific position to be able to register the position in the marker in the robot coordinate system. In other words, when the position in the marker is to be registered, it is possible to prevent the axial direction in the coordinate system from being erroneously registered.

A marker position registration method according to still another aspect of the present invention is a method to be implemented by a processor, the method including the steps of: causing an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and registering the specific position in the robot coordinate system on the basis of a content input to the input form.

According to this aspect, it is possible to allow the coordinates in the robot coordinate system corresponding to the specific portion of the industrial robot indicating the specific position in the marker to be input in association with the position identifier assigned to the indicated specific position and register the input position identifier of the marker and the coordinates in the robot coordinate system of the specific position corresponding to the position identifier in association with each other. As a result, a worker inputs the specific position in the marker according to the position identifier assigned to the marker without being conscious of an axial direction in the robot coordinate system and inputs the coordinates in the robot coordinate system of the specific position to be able to register the position in the marker in the robot coordinate system. In other words, when the position in the marker is to be registered, it is possible to prevent the axial direction in the coordinate system from being erroneously registered.

A marker according to yet another aspect of the present invention is a marker for use in the above marker position registration method.

According to this aspect, when a corner position of the marker is to be registered, it is possible to allow the corner position of the marker to be input on the basis of a corner identifier assigned to the marker and therefore prevent an axial direction in a coordinate system from being erroneously registered.

According to the present invention, it is possible to provide a marker position registration program, a marker position registration device, a marker position registration method, and a marker for use in the method which can prevent an axial direction in a coordinate system from being erroneously registered when a position in the marker is to be registered.

**Brief Description of Drawings**

FIG. 1 is a diagram illustrating an example of a configuration of a welding robot system including a photographing device in which a marker position registration program according to an embodiment is installed;
FIG. 2 is a diagram illustrating an example of a marker according to the embodiment;
FIG. 3 is a diagram illustrating an example of a functional configuration of the photographing device;
FIG. 4 is a diagram illustrating an example of an input form;
FIG. 5 is a schematic diagram for illustrating a specific example when data is input to the input form;
FIG. 6 is a flow chart for illustrating an operation of the photographing device in which the marker position registration program according to the embodiment is installed; and
FIG. 7 is a diagram illustrating an example of a marker according to a modification.

**Detailed Description**

Referring to the accompanying drawings, a description will be given of a preferred embodiment of the present invention. Note that, throughout the individual figures, components denoted by the same reference signs have the same or similar configurations. In addition, since the drawings are schematic, dimensions or ratios of the individual components are different from those of real components.

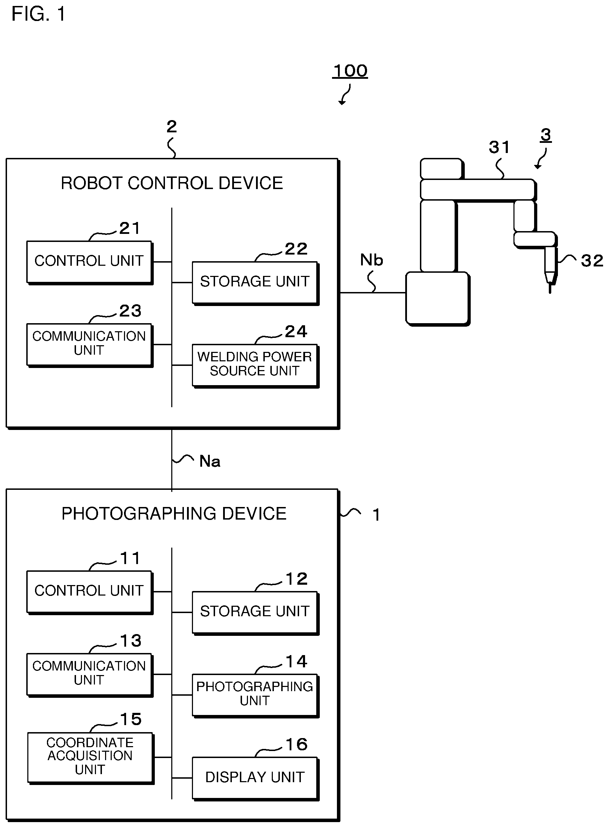

FIG. 1 is a diagram illustrating an example of a configuration of a welding robot system 100 including a photographing device (marker position registration device) 1 in which a marker position registration program according to the embodiment is installed. The welding robot system 100 includes, e.g., the photographing device 1, a robot control device 2, and a manipulator 3. The photographing device 1 and the robot control device 2 are connected via, e.g., a network Na, while the robot control device 2 and the manipulator 3 are connected via, e.g., a communication cable Nb. The network Na may be either wireless or wired (including the communication cable). Note that the welding robot system 100 may also include a teach pendant. The teach pendant is an operating device to be used by a worker in teaching a motion to be performed by the manipulator 3, and can be used by being connected to the robot control device 2.

The manipulator 3 is a welding robot that performs arc welding according to execution conditions set in the robot control device 2. The manipulator 3 includes, e.g., a multi-junction arm 31 provided on a base member fixed to a floor surface or the like in a factory and a welding torch 32 connected to a leading end of the multi-junction arm 31. To the leading end of the multi-junction arm 31, a tool or the like can also be connected instead of the welding torch 32.

The robot control device 2 is a control unit that controls the motion of the manipulator 3 and includes, e.g., a control unit 21, a storage unit 22, a communication unit 23, and a welding power source unit 24.

The control unit 21 is, e.g., a processor, and the processor executes a work operation program stored in the storage unit 22 to control the manipulator 3 and the welding power source unit 24.

The communication unit 23 controls communication with the photographing device 1 connected thereto via the network Na and controls communication with the manipulator 3 connected thereto via the communication cable Nb.

The welding power source unit 24 supplies, according to welding execution conditions determined in advance, a welding current, a welding voltage, and the like to the manipulator 3 so as to, e.g., generate an arc between a leading end of a welding wire and a work. Examples of the welding execution conditions include data items such as a welding condition, a welding starting position, a welding ending position, a welding distance, and a posture of the welding torch. Examples of the welding condition include data items such as the welding current, the welding voltage, a welding speed, a wire feeding speed, and a thickness of the work. The welding power source unit 24 may also be provided separately from the robot control device 2.

As the photographing device 1, e.g., a tablet terminal with a digital camera can be used. However, the photographing device 1 is not limited thereto, and may also be a portable terminal with a digital camera. Examples of the portable terminal include transportable terminals such as an AR device, a smartphone, a personal data assistant (PDA), and a notebook PC (personal computer).

The photographing device 1 includes, e.g., a control unit 11, a storage unit 12, a communication unit 13, a photographing unit 14, a coordinate acquisition unit 15, and a display unit 16.

The control unit 11 is, e.g., a processor, and the processor executes a program such as the marker position registration program stored in the storage unit 12 to control the individual units of the photographing device 1.

The storage unit 12 stores various programs and data. Examples of the various programs include the marker position registration program according to the embodiment and the like. Examples of the various data include marker information related to markers, marker placement information related to placement of the markers, and the like. A description will be given below of the marker information and the marker placement information.

The marker information can include marker IDs and identification images each for specifying the markers, size information related to sizes of the markers (e.g., lengths of sides of a quadrilateral and angles of vertices thereof), shape information related to shapes of the markers (e.g., a square and a rectangle), and the like. Details of the markers will be described later.

The marker placement information can include, e.g., for each of the marker IDs, robot-coordinate-system position information of each of specific positions (e.g., four corner positions of the marker) provided in the marker having the ID and the like. Note that the marker placement information may also be included in the marker information and managed.

The communication unit 13 controls communication with the robot control device 2 connected via the network Na.

The photographing unit 14 is a digital camera including, e.g., a lens and an image capturing element (image sensor), and converts light from a photographed object that has been received by the lens to an electric signal (digital image data). The digital camera may be either a two-dimensional camera or a three-dimensional camera. By way of example, the photographing unit 14 according to the present embodiment photographs an image including a work area of the manipulator 3 and any of the markers.

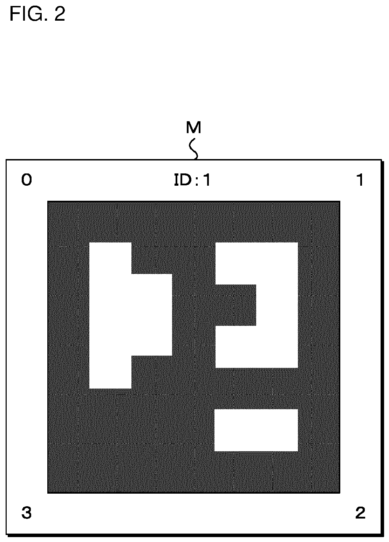

FIG. 2 illustrates an example of the marker according to the present embodiment. In the vicinity of a middle of an upper part of a marker M illustrated in the figure, "1" is provided as the marker ID (marker identifier) for specifying the marker while, in the vicinities of four corners of the marker M, numbers "0" to "3" are provided as corner NOs (corner identifiers) for specifying corner positions. Inside a peripheral edge portion of the marker M, the identification image different in pattern or shape from one marker to another is provided.

Note that the marker is not limited to the marker illustrated in FIG. 2 and may be any marker as long as the marker allows the photographing unit 14 to recognize the marker as such. As the marker, e.g., an AR marker is preferably used. By using the AR marker, when the AR marker is recognized, it is possible to easily implement display of a camera coordinate system based on the AR marker in superimposed relation on a real image or the like. The marker identifier is not limited to the marker ID, and may also be, e.g., a number, an image, a shape, or a combination thereof. Each of the corner identifiers is not limited to the corner NO, and may also be, e.g., a symbol, a color, a shape, or a combination thereof.

The coordinate acquisition unit 15 illustrated in FIG. 1 acquires coordinate data corresponding to the photographed object. The coordinate data corresponding to the photographed object can be acquired using, e.g., a distance measurement sensor. As the distance measurement sensor, e.g., a LiDAR (Light Detection and Ranging) sensor, a millimeter wave sensor, an ultrasonic wave sensor, or the like can be used. Note that the coordinate data corresponding to the photographed object may also be acquired by being arithmetically determined on the basis of a plurality of images obtained by photographing the object to be photographed at a plurality of different positions.

The display unit 16 is, e.g., a display having a touch panel, and displays a screen image of the object photographed by the photographing unit 14, while receiving an input of an operation instruction from the worker or the like. The display unit 16 may also be provided as, e.g., a display device having a touch panel separately from the photographing device 1.

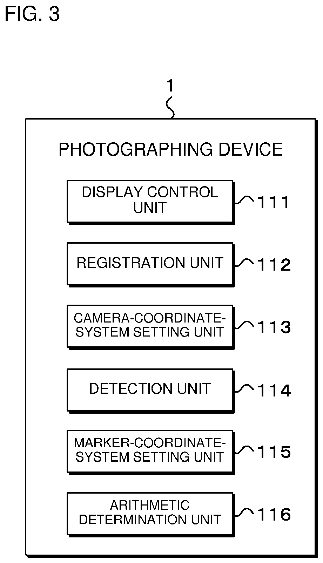

FIG. 3 is a diagram illustrating an example of a functional configuration of the photographing device 1 according to the present invention. As the functional configuration, the photographing device 1 has, e.g., a display control unit 111, a registration unit 112, a camera-coordinate-system setting unit 113, a detection unit 114, a marker-coordinate-system setting unit 115, and an arithmetic determination unit 116.

The display control unit 111 controls a content to be displayed on the display unit 16. Examples of the content to be displayed on the display unit 16 include an input form.

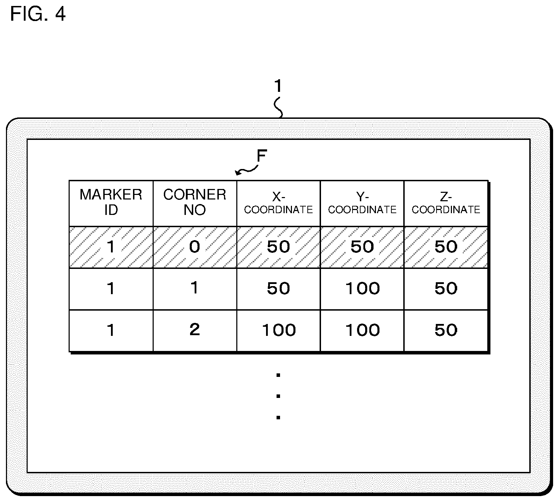

FIG. 4 illustrates an example of the input form. In an input form F in the figure, as input items to be input by the worker, the marker ID, the corner NO, an X-coordinate, a Y-coordinate, and a Z-coordinate are provided by way of example. To the marker ID in the input form F, the ID assigned to the marker M is input. To the corner NO in the input form F, a number provided at the corner position of the marker M indicated by a leading end (specific portion) of the tool connected to the leading end of the multi-junction arm 31 of the manipulator 3 is input. To the X-coordinate, the Y-coordinate, and the Z-coordinate in the input form F, respective coordinates in the robot coordinate system each corresponding to the leading end of the tool are input. Note that the respective coordinates to be input to the X-coordinate, the Y-coordinate, and the Z-coordinate in the input form F are not limited to the coordinates in the robot coordinate system, and may be in any coordinate system different from the coordinate system of the coordinate data acquired by the coordinate acquisition unit 15.

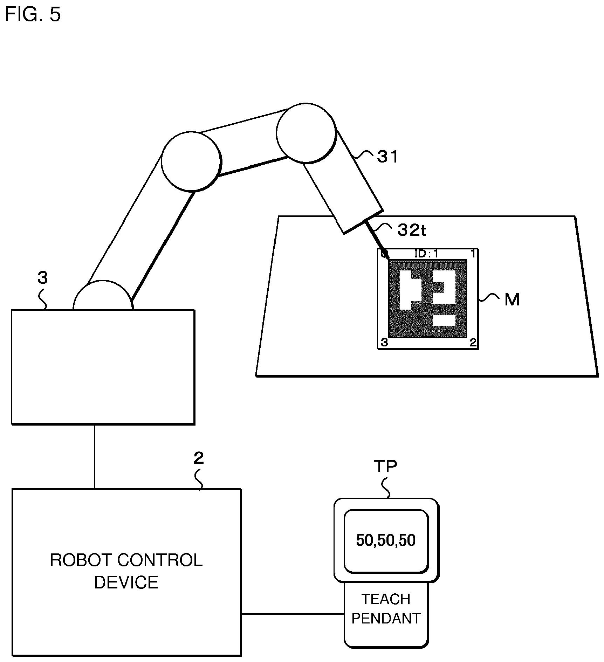

Referring also to FIG. 4 in addition to FIG. 5, a specific description will be given. The marker M illustrated in FIG. 5 is the same as the marker M in FIG. 2. In this case, the ID "1" assigned to the marker M is input to, e.g., the marker ID in the first row of the input form F in FIG. 4. Subsequently, a leading end of a tool 32t in FIG. 5 indicates the corner position corresponding to the corner number "0" of the marker M. Accordingly, the corner number "0" assigned to the marker is input to the corner NO in the first row of the input form F in FIG. 4. Subsequently, on a teach pendant TP in FIG. 5, as coordinates in the robot coordinate system each corresponding to the leading end of the tool 32t, "50, 50, 50" are displayed. Therefore, to each of the X-coordinate, the Y-coordinate, and the Z-coordinate in the first row of the input form F in FIG. 4, "50" is input.

The registration unit 112 illustrated in FIG. 3 generates information related to the position of the marker M in the robot coordinate system on the basis of the content input to the input form F and registers the information in the marker placement information described above. This allows the position of the marker M in the camera coordinate system and the position of the marker M in the robot coordinate system to be associated with each other.

It is preferable to input, to the input form F, information related to three or more corner positions among the four corner positions present in the marker M and register the information in the marker placement information, but the present invention is not limited thereto. For example, it may also be possible to register, e.g., information related of one of the corner positions present in the marker M, calculate the other three corner positions on the basis of each of the registered information related to the one corner position and the size information and shape information each included in the marker information corresponding to the marker M, and register the corner positions in the marker placement information.

The camera-coordinate-system setting unit 113 sets the three-dimensional camera coordinate system. The camera coordinate system is a coordinate system set on the basis of the photographing unit 14, and the three-dimensional camera coordinate system can be set by, e.g., using a center of the lens of the photographing unit 14 or the like as an origin.

The detection unit 114 detects, from within an image photographed by the photographing unit 14, the marker registered in the marker placement information. For example, it may be possible to recognize, in the photographed image, a graphic pattern or shape of the identification image assigned to the marker, the shape of the marker, or the like, and detect the marker specified on the basis of what is recognized as the registered marker when the marker is registered in the marker placement information.

The marker-coordinate-system setting unit 115 sets the three-dimensional marker coordinate system on the basis of the marker detected by the detection unit 114. For example, the three-dimensional marker coordinate system may also be set by using a specific point (reference point) in the marker as an origin. When there are a plurality of the detected markers, it may be possible that, e.g., the worker optionally selects the marker to be used as a reference and set the marker coordinate system or sets the marker coordinate system on the basis of the marker at a position closest to a center of the photographed image. The specific point in the marker may be, e.g., a center position in the marker or the position selected by the worker on the touch panel.

The arithmetic determination unit 116 arithmetically determines the conversion formula for performing coordinate conversion between the camera coordinate system and the marker coordinate system on the basis of the respective corner positions of the marker detected by the detection unit 114 in the camera coordinate system and the marker coordinate system. The following is a specific description thereof.

First, on the basis of respective coordinates of the corner NOs "0", "1 ", and "2" in the marker M, each of a camera coordinate system A and a marker coordinate system B is defined as in (1) shown below. It is assumed herein that the respective coordinates of the corner NO "0" in the camera coordinate system and the marker coordinate system are $(x_0, y_0, z_0)$ and $(x'_0, y'_0, z'_0)$. It is assumed that the respective coordinates of the corner NO "1" in the camera coordinate system and the marker coordinate system are $(x_1, y_1, z_1)$ and $(x'_1, y'_1, z'_1)$. It is assumed that the respective coordinates of the corner NO "2" in the camera coordinate system and the marker coordinate system are $(x_2, y_2, z_2)$ and $(x'_2, y'_2, z'_2)$.

[Math. 1]

$$A = \begin{bmatrix} x_0 & x_1 & x_2 \\ y_0 & y_1 & y_2 \\ z_0 & z_1 & z_2 \end{bmatrix}, \quad B = \begin{bmatrix} x'_0 & x'_1 & x'_2 \\ y'_0 & y'_1 & y'_2 \\ z'_0 & z'_1 & z'_2 \end{bmatrix} \quad \cdots \quad (1)$$

Using the camera coordinate system A and the marker coordinate system B in (1) shown above, a conversion matrix (A0, B0, Mt) between the camera coordinate system and the marker coordinate system is calculated. The coordinate A0, the coordinate B0, and the rotation matrix Mt each included in the conversion matrix are defined as in (2) shown below.

[Math. 2]

$$A0 = \begin{bmatrix} x_1 \\ y_1 \\ z_1 \end{bmatrix}, \; B0 = \begin{bmatrix} x'_1 \\ y'_1 \\ z'_1 \end{bmatrix}, \; Mt = V_B \cdot V_A^{-1} \quad \cdots \quad (2)$$

"$V_A$" in (2) shown above is calculated as in (3) shown below.
[Math. 3]

$$V_A = \begin{bmatrix} \dfrac{vecA_0}{|vecA_0|} & \dfrac{vecA_1}{|vecA_1|} & \dfrac{vecA_2}{|vecA_2|} \end{bmatrix} \quad \cdots \quad (3)$$

Each of "$vecA_0$", "$vecA_1$", and "$vecA_2$" in (3) shown above is calculated as in (4) shown below.
[Math. 4]

$$vecA_0 = \begin{bmatrix} x_0 - x_1 \\ y_0 - y_1 \\ z_0 - z_1 \end{bmatrix}, \; vecA_1 = \begin{bmatrix} x_2 - x_1 \\ y_2 - y_1 \\ z_2 - z_1 \end{bmatrix}, \; vecA_2 = vecA_0 \times vecA_1 \quad \cdots \quad (4)$$

"$V_B$" in (2) shown above is calculated as in (5) shown below.
[Math. 5]

$$V_B = \begin{bmatrix} \dfrac{vecB_0}{|vecB_0|} & \dfrac{vecB_1}{|vecB_1|} & \dfrac{vecB_2}{|vecB_2|} \end{bmatrix} \quad \cdots \quad (5)$$

Each of "$vecB_0$", "$vecB_1$", and "$vecB_2$" in (5) shown above is calculated as in (6) shown below.
[Math. 6]

$$vecB_0 = \begin{bmatrix} x'_0 - x'_1 \\ y'_0 - y'_1 \\ z'_0 - z'_1 \end{bmatrix}, \; vecB_1 = \begin{bmatrix} x'_2 - x'_1 \\ y'_2 - y'_1 \\ z'_2 - z'_1 \end{bmatrix}, \; vecB_2 = vecB_0 \times vecB_1 \quad \cdots \quad (6)$$

On the basis of (1) to (6) shown above, a conversion formula for converting a point $p_A$ in the camera coordinate system acquired by the coordinate acquisition unit 15 to a point $p_B$ in the marker coordinate system can be represented as by (7) shown below.
[Math. 7]

$$p_B = Mt \cdot (p_A - A0) + B0 \quad \cdots \quad (7)$$

Likewise, a conversion formula for converting a point $v_A$ of a position vector in the camera coordinate system to a point $v_B$ of a position vector in the marker coordinate system can be represented as by (8) shown below.
[Math 8]

$$v_B = Mt \cdot v_A \quad \cdots \quad (8)$$

Likewise, a conversion formula for converting the point $p_B$ in the marker coordinate system to the point $p_A$ in the camera coordinate system can be represented as by (9) shown below.
[Math. 9]

$$p_A = Mt^{-1} \cdot (p_B - B0) + A0 \quad \dots \quad (9)$$

Likewise, a conversion formula for converting the point $v_B$ of a position vector in the marker coordinate system to the point $v_A$ of the position vector in the camera coordinate system can be represented as by (10) shown below.
[Math. 10]

$$v_A = Mt^{-1} \cdot v_B \quad \dots \quad (10)$$

The conversion formulae shown above in (7) to (10) allow the camera coordinate system and the marker coordinate system to be associated with each other, and the mark placement information allows the marker coordinate system and the robot coordinate system to be associated with each other. This also allows the camera coordinate system and the robot coordinate system to be associated with each other.

By using the conversion formulae shown above in (7) to (10), it is possible to, e.g., allow the display unit 16 to perform AR display of a model of the manipulator 3 and simulate the motion of the manipulator 3 on the display unit 16.

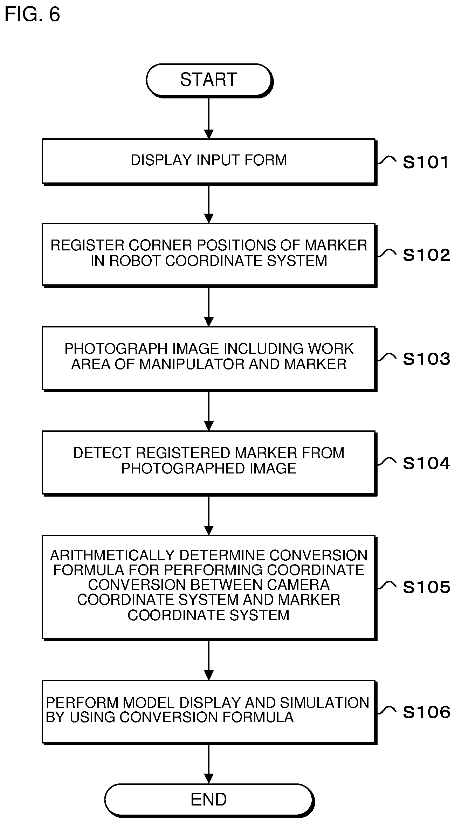

Referring to FIG. 6, a description will be given of an example of an operation of the photographing device 1 in which the marker position registration program according to the embodiment is installed.

First, the control unit 11 of the photographing device 1 causes the display unit 16 to display the input form illustrated in, e.g., FIG. 4 (Step S101). A trigger for displaying the input form may be, e.g., an operation instruction from the worker or a display instruction from the robot control device 2 to which the teach pendant TP is to be connected.

Subsequently, the control unit 11 of the photographing device 1 registers, on the basis of the content input to the input form, information related to the corner positions of the marker M in the robot coordinate system (Step S102).

Subsequently, the photographing unit 14 of the photographing device 1 photographs an image including each of the work area of the manipulator 3 and the marker M (Step S103).

Subsequently, the control unit 11 of the photographing device 1 detects the marker M registered in Step S102 described above from the image photographed in Step S103 described above (Step S104).

Subsequently, the control unit 11 of the photographing device 1 arithmetically determines, on the basis of the respective corner positions of the marker M detected in Step S104 described above in the camera coordinate system and the marker coordinate system, the conversion formula for performing coordinate conversion between the camera coordinate system and the marker coordinate system (Step S105).

Subsequently, the control unit 11 of the photographing device 1 causes the display unit 16 to perform the AR display of the model of the manipulator 3 using the conversion formula arithmetically determined in Step S105 described above and simulates the motion of the manipulator 3 by using the model (Step S106). Then, the present motion is ended.

As described above, the photographing device 1 in which the marker position registration program according to the embodiment is installed allows the coordinates in the robot coordinate system corresponding to the leading end of the tool 32t of the manipulator 3 indicating the corner position of the marker M to be input in association with the corner NO assigned to the indicated corner position and allows the corner NO of the input marker M and the coordinates in the robot coordinate system of the corner position corresponding to the corner NO to be registered in association with each other.

As a result, the worker inputs, to the input form F, the corner position of the marker M on the basis of the corner NO assigned to the marker M without being conscious of axial directions in the robot coordinate system and inputs, to the input form F, the coordinates in the robot coordinate system of the corner position to be able to register the position of the marker M in the robot coordinate system. In other words, when the position of the marker M is to be registered, it is possible prevent the axial directions in the robot coordinate system from being erroneously registered.

In addition, the marker ID is further assigned to the marker M and the input form F is further provided with the item to which the marker ID is to be input in association with the corner NO, and therefore it is possible to input, to the input form F, the marker ID assigned to the marker M in association with the corner NO assigned to the marker M and register the marker ID. Consequently, it is possible to inhibit the marker ID from being erroneously input and registered.

When the marker M registered in the marker placement information is detected in a photographed image, it is possible to arithmetically determine the conversion formula for performing coordinate conversion between the camera coordinate system and the marker coordinate system by using the respective coordinates of the corner position of the marker M in the camera coordinate system and the marker coordinate system. Then, by using the conversion formula, it is possible to easily perform calibration to adjust the positional relationship between the marker M and the manipulator 3.

(Modification)

Note that the present invention is not limited to the embodiment described above, and can variously be carried out in various other forms within the scope not departing from the gist of the present invention. Therefore, the embodiment described above is to be construed in all respects only as illustrative and not restrictive.

For example, in the embodiment described above, the position in the robot coordinate system corresponding to each of the corners present in the one marker M is registered, and the conversion formula is arithmetically determined on the basis of the registered position. However, the present invention is not limited thereto. For example, it may also be possible to register the respective positions in the robot coordinate system corresponding to the plurality of corners in a plurality of the markers and arithmetically determine the conversion formula on the basis of the registered positions.

This allows the corner positions to be distributed to a plurality of the markers M to be set, and therefore it is possible to change distances between the corner positions through adjustment of the positions at which the markers M are placed or the like. An error during the coordinate conversion tends to decrease when distances between reference points at the time of the conversion are increased. Accordingly, by increasing intervals at which the markers M are disposed and increasing the distances between the corner positions, it is possible to reduce the error in the coordinate conversion based on the corner positions.

In the embodiment described above, the description has been given of a case where the photographing unit 14, the coordinate acquisition unit 15, and the display unit 16 each illustrated in FIG. 1 are included in the one device. However, the present invention is not limited thereto and, e.g., the photographing unit 14, the coordinate acquisition unit 15, and the display unit 16 may also be distributed to a device different from the photographing device 1 and included therein.

In the embodiment described above, the "corner identifier" is assigned to the "corner position" of the marker, and the coordinates in the robot coordinate system corresponding to the leading end of the tool 32t indicating the "corner position" are input to the input form F. However, the present invention is not limited thereto as long as it is possible to assign, to a "specific position" in the marker, a "position identifier" specifying the position and input, to the input form F, the coordinates in the robot coordinate system corresponding to the leading end of the tool 32t indicating the "specific position".

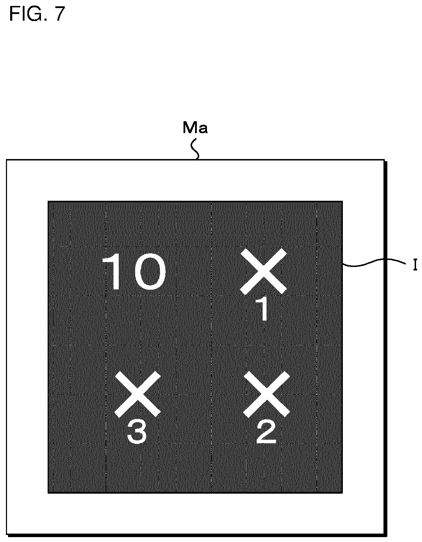

Referring to FIG. 7, a specific description will be given. To an identification image I provided inside a peripheral edge portion of a marker Ma illustrated in the figure, "10" is assigned as a marker identifier for specifying the marker and, in the vicinities of three specific positions (positions each indicated by the mark x) in the marker Ma, numbers "1" to "3" are provided as position identifiers for specifying the specific positions.

In the embodiment described above, the description has been given using the welding robot, but the present invention is not limited thereto. For example, the present invention is applicable to an industrial robot including a handling robot that performs picking or the like.

A program in the embodiment described above can be installed or loaded in a computer by being downloaded from a server device (medium) through various recording media (non-transitory computer readable media) such as an optical disk such as a CD-ROM, a magnetic disk, and a semiconductor memory or via a communication network or the like.

**Claims**

1. A marker position registration program that causes a computer to function as:

   a display control unit (111) that causes an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and
   a registration unit (112) that registers the specific position in the robot coordinate system on the basis of a content input to the input form.

2. The marker position registration program according to claim 1, wherein

   a marker identifier for specifying the mark is further assigned to the marker, and
   the input form is further provided with an item to which the marker identifier is to be input in association with the position identifier.

3. The marker position registration program according to claim 1, wherein the marker position registration program further causes the computer to function as:

   a photographing unit (14) that photographs an image including a work area of the industrial robot and the marker;
   a detection unit (114) that detects the marker for which the specific position is registered by the registration unit on the basis of the image photographed by the photographing unit; and

an arithmetic determination unit (116) that arithmetically determines, on the basis of the specific position in the detected marker in each of a camera coordinate system based on the photographing unit and a marker coordinate system based on the detected marker, a conversion formula for performing coordinate conversion between the camera coordinate system and the marker coordinate system.

4.  The marker position registration program according to claim 1, wherein the specific position includes positions individually corresponding to three or more portions included in the one marker.

5.  The marker position registration program according to claim 1, wherein the specific position includes positions individually corresponding to a plurality of portions in a plurality of the markers.

6.  A marker position registration device (1) comprising:

    a display control unit (111) that causes an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and

    a registration unit (112) that registers the specific position in the robot coordinate system on the basis of a content input to the input form.

7.  A marker position registration method to be implemented by a processor, the marker position registration method comprising the steps of:

    causing an input form to be displayed, the input form allowing coordinates in a robot coordinate system corresponding to a specific portion of an industrial robot when the specific portion indicates a specific position in a marker to be input in association with a position identifier for specifying the specific position which is assigned to the marker; and

    registering the specific position in the robot coordinate system on the basis of a content input to the input form.

8.  A marker for use in the marker position registration method according to claim 7.

FIG. 1

100

**ROBOT CONTROL DEVICE** 2

CONTROL UNIT 21

STORAGE UNIT 22

COMMUNICATION UNIT 23

WELDING POWER SOURCE UNIT 24

Nb

31 3

32

Na

**PHOTOGRAPHING DEVICE** 1

CONTROL UNIT 11

STORAGE UNIT 12

COMMUNICATION UNIT 13

PHOTOGRAPHING UNIT 14

COORDINATE ACQUISITION UNIT 15

DISPLAY UNIT 16

FIG. 2

FIG. 3

1

PHOTOGRAPHING DEVICE

DISPLAY CONTROL
UNIT                    111

REGISTRATION UNIT       112

CAMERA-COORDINATE-
SYSTEM SETTING UNIT     113

DETECTION UNIT          114

MARKER-COORDINATE-
SYSTEM SETTING UNIT     115

ARITHMETIC
DETERMINATION UNIT      116

FIG. 4

1

F

| MARKER ID | CORNER NO | X-COORDINATE | Y-COORDINATE | Z-COORDINATE |
|-----------|-----------|--------------|--------------|--------------|
| 1 | 0 | 50 | 50 | 50 |
| 1 | 1 | 50 | 100 | 50 |
| 1 | 2 | 100 | 100 | 50 |

.
.
.

FIG. 5

FIG. 6

START

DISPLAY INPUT FORM ~ S101

REGISTER CORNER POSITIONS OF MARKER
IN ROBOT COORDINATE SYSTEM ~ S102

PHOTOGRAPH IMAGE INCLUDING WORK
AREA OF MANIPULATOR AND MARKER ~ S103

DETECT REGISTERED MARKER FROM
PHOTOGRAPHED IMAGE ~ S104

ARITHMETICALLY DETERMINE CONVERSION
FORMULA FOR PERFORMING COORDINATE
CONVERSION BETWEEN CAMERA
COORDINATE SYSTEM AND MARKER
COORDINATE SYSTEM ~ S105

PERFORM MODEL DISPLAY AND SIMULATION
BY USING CONVERSION FORMULA ~ S106

END

FIG. 7

Europäisches
Patentamt

European
Patent Office

Office européen
des brevets

# EUROPEAN SEARCH REPORT

Application Number

EP 23 16 6437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/229620 A1 (IKEDA YASUYUKI [JP] ET AL) 13 September 2012 (2012-09-13) <br> * paragraph [0046] – paragraph [0056] * <br> * paragraph [0077] – paragraph [0094] * <br> * paragraph [0132] – paragraph [0198] * <br> * figures 1,3,6-19 * | 1-8 | INV. <br> B25J9/16 <br> B25J13/08 <br> G05B19/401 <br> G05B19/409 |
| X | US 2014/288710 A1 (IKENAGA TAKAHISA [JP] ET AL) 25 September 2014 (2014-09-25) <br> * paragraph [0046] – paragraph [0049] * <br> * paragraph [0055] – paragraph [0060] * <br> * figures 7-9 * | 1-8 | |
| X | JP H04 15883 A (OMRON TATEISI ELECTRONICS CO) 21 January 1992 (1992-01-21) <br> * the whole document * | 1-8 | |
| X | US 2021/114231 A1 (KATAGIRI TAIKI [JP] ET AL) 22 April 2021 (2021-04-22) <br> * paragraph [0030] – paragraph [0038] * <br> * figure 1 * | 8 | |
| X | US 2022/168902 A1 (STENBACKA MICHAEL [SE] ET AL) 2 June 2022 (2022-06-02) <br> * the whole document * | 8 | TECHNICAL FIELDS SEARCHED (IPC) <br><br> B25J <br> G05B |

The present search report has been drawn up for all claims

| Place of search | Date of completion of the search | Examiner |
|---|---|---|
| Munich | 30 October 2023 | Gardella, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6437

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2023

| Patent document cited in search report | | Publication date | Patent family member(s) | | Publication date |
|---|---|---|---|---|---|
| US 2012229620 | A1 | 13-09-2012 | CN | 102674073 A | 19-09-2012 |
| | | | EP | 2497611 A2 | 12-09-2012 |
| | | | EP | 3020517 A2 | 18-05-2016 |
| | | | JP | 2012187651 A | 04-10-2012 |
| | | | US | 2012229620 A1 | 13-09-2012 |
| US 2014288710 | A1 | 25-09-2014 | CN | 104057457 A | 24-09-2014 |
| | | | EP | 2783814 A2 | 01-10-2014 |
| | | | JP | 2014180720 A | 29-09-2014 |
| | | | US | 2014288710 A1 | 25-09-2014 |
| JP H0415883 | A | 21-01-1992 | JP | 2959043 B2 | 06-10-1999 |
| | | | JP | H0415883 A | 21-01-1992 |
| US 2021114231 | A1 | 22-04-2021 | CN | 112677148 A | 20-04-2021 |
| | | | DE | 102020212013 A1 | 22-04-2021 |
| | | | JP | 7359633 B2 | 11-10-2023 |
| | | | JP | 2021062463 A | 22-04-2021 |
| | | | US | 2021114231 A1 | 22-04-2021 |
| US 2022168902 | A1 | 02-06-2022 | CN | 113597362 A | 02-11-2021 |
| | | | EP | 3946825 A1 | 09-02-2022 |
| | | | US | 2022168902 A1 | 02-06-2022 |
| | | | WO | 2020192882 A1 | 01-10-2020 |

EPO FORM P0459

For more details about this annex : see Official Journal of the European Patent Office, No. 12/82

**EP 4 289 565 A1**

REFERENCES CITED IN THE DESCRIPTION

**Patent documents cited in the description**

- JP 2021062463 A